# EUROPÄISCHE PATENTANMELDUNG

(11) **EP 1 605 022 A1**
(43) Veröffentlichungstag der Anmeldung: **14.12.2005**
(21) Anmeldenummer: 04405357.7
(22) Anmeldetag: 09.06.2004
(51) Int. Cl.: C08L 95/00, E01C 7/00

(54) **Baustoff zur Herstellung eines Fahrbahnbelags**

(71) Anmelder: Hans Weibel AG Bauunternehmung, 3018 Bern (CH)
(72) Erfinder: Steiner, Frank, 3210 Kerzers (CH)
(74) Vertreter: Roshardt, Werner Alfred

(57) **Zusammenfassung**

Ein Baustoff ist aus einer Mischung hergestellt, die wenigstens die folgenden Komponenten aufweist: Belagsbindemittel; Splitt aus einem Steinmaterial, das eine aus einem ersten mineralischen Material gebildete Matrix aufweist, in welche Körner eingebettet sind, die aus einem zweiten mineralischen Material gebildet sind, wobei das zweite mineralische Material härter ist als das erste mineralische Material; Leichtzuschlag.

Zur Herstellung eines Fahrbahnbelags aus diesem Baustoff wird der Baustoff zunächst in einem erwärmten Zustand vergossen und danach durch Abkühlen verfestigt.

Der solcherart hergestellte Fahrbahnbelag ist langfristig lärmmindernd und rutschsicher.

## Beschreibung

### Technisches Gebiet

Die vorliegende Erfindung betrifft einen Baustoff zur Herstellung eines Fahrbahnbelags, der gute lärmmindernde Eigenschaften aufweist, sowie die Verwendung eines solchen Baustoffs zur Herstellung eines Fahrbahnbelags.

### Stand der Technik

Zur Herstellung von Fahrbahnbelägen für Strassen, Brücken, Parkplätzen und ähnlichen Verkehrsflächen sind Baustoffe in Form von speziellen Asphalten bekannt, welche dafür sorgen, dass die Fahrbahnbeläge nach ihrer Herstellung eine relativ hohe Oberflächenrauhigkeit aufweisen. Die hohe Oberflächenrauhigkeit sorgt zum Einen dafür, dass der beim Befahren der Beläge durch den motorisierten Fahrzeugverkehr erzeugte Lärm durch den Fahrbahnbelag vergleichsweise stark absorbiert wird. Dadurch lässt sich eine Lärmminderung in der Umgebung von mit solchen Fahrbahnbelägen versehenen Verkehrsflächen erreichen, was insbesondere im Falle von stark frequentierten Verkehrsflächen in der Nähe von Siedlungsgebieten erwünscht ist. Zum Andern sorgt die hohe Oberflächenrauhigkeit auch für eine gute Haftung von Fahrzeugreifen auf diesen Fahrbahnbelägen, was zur Verbesserung der Verkehrssicherheit beiträgt.

In der Druckschrift FR 1 094 996 ist ein Asphalt zur Herstellung eines Strassenbelags beschrieben, dem Blähton beigemischt ist. Der Blähton schwimmt nach dem Vergiessen des flüssigen Asphalts vor dessen Abkühlen an die Oberfläche auf und bildet dort aufgrund der hohen Porosität des Blähtons eine vergleichsweise rauhe Oberfläche.

Bisher bekannte Baustoffe zur Herstellung von Fahrbahnbelägen mit einer hohen Oberflächenrauhigkeit weisen den Nachteil auf, dass die mit ihnen hergestellten Fahrbahnbeläge unter der Einwirkung des motorisierten Fahrzeugverkehrs einem schnellen Verschleiss und Abrieb unterliegen. Insbesondere wenn die Fahrzeuge mit einer relativ hohen Geschwindigkeit über die Fahrbahnbeläge fahren, verlieren diese bereits kurze Zeit nach der Herstellung ihre hohe Oberflächenrauhigkeit und werden glatt. Mit dem Verlust der hohen Oberflächenrauhigkeit geht auch die lärmmindernde Eigenschaft des Fahrbahnbelags verloren.

### Darstellung der Erfindung

Aufgabe der Erfindung ist es, ein dem eingangs genannten technischen Gebiet zugehörender Baustoff zu schaffen, welcher die Herstellung eines lärmmindernden Fahrbahnbelags ermöglicht, wobei die lärmmindernde Wirkung des Fahrbahnbelags über einen vergleichsweise langen Zeitraum erhalten bleibt.

Die Lösung der Aufgabe ist durch die Merkmale der unabhängigen Patentansprüche definiert. Gemäss der Erfindung ist ein Baustoff zur Herstellung eines Fahrbahnbelags aus einer Mischung hergestellt, die wenigstens die folgenden Komponenten aufweist:
a) Belagsbindemittel;
b) Splitt aus einem Steinmaterial, das eine aus einem ersten mineralischen Material gebildete Matrix aufweist, in welche Körner eingebettet sind, die aus einem zweiten mineralischen Material gebildet sind, wobei das zweite mineralische Material härter ist als das erste mineralische Material;
c) Leichtzuschlag.

Im vorliegenden Zusammenhang ist unter Splitt gebrochenes Steinmaterial (auch als gebrochenes Gestein bezeichnet) mit einer Korngrösse von mehr als 2 mm zu verstehen. Steinmaterial mit einer Korngrösse zwischen 80 µm und 2 mm wird als Sand bezeichnet, während Steinmaterial mit einer Korngrösse von weniger als 80 µm als Steinmehl bezeichnet wird.

Weiter bedeutet im Zusammenhang mit der vorliegenden Patentanmeldung Leichtzuschlag ein u.a. auch für Beton verwendbarer Zuschlagsstoff mit einem porigen Gefüge (d.h. einer vergleichsweise hohen Porosität) gemäss der DIN-Norm 4226, Teil 2.

Als Härte von Gestein oder mineralischem Material wird dessen Ritzhärte verstanden, die z.B. anhand der Mohsschen Härteskala quantifizierbar ist.

Unter einem Belagsbindemittel ist irgend ein Bindemittel zu verstehen, wie es für die Herstellung von Fahrbahnbelägen gebräuchlich ist.

Es hat sich in überraschender Weise herausgestellt, dass ein aus dem oben erwähnten Baustoff hergestellter Fahrbahnbelag nicht nur für eine kurze Zeit nach seiner Herstellung, sondern auch langfristig lärmmindernd und rutschsicher ist.

Der Splitt und die Porosität des Leichtzuschlags im erfindungsgemässen Baustoff sorgen dafür, dass ein mit diesem Baustoff hergestellter Fahrbahnbelag nach seiner Herstellung eine Oberfläche mit einer relativ hohen Oberflächenrauhigkeit hat. Dadurch wird zum Einen eine Minderung des beim Befahren des Fahrbahnbelags mit Motorfahrzeugen erzeugten Lärms und zum Andern eine gute Haftung von Fahrzeugreifen auf dem Fahrbahnbelag erreicht.

Weil der Splitt des erfindungsgemässen Baustoffs aus einem Steinmaterial besteht, das eine aus einem ersten mineralischen Material gebildete Matrix aufweist, in welche Körner eingebettet sind, die aus einem zweiten mineralischen Material gebildet sind, wobei das zweite mineralische Material härter ist als das erste mineralische Material, unterliegt dieser Splitt beim Befahren des Fahrbahnbelags durch den motorisierten Verkehr einer differentiellen Abnutzung. D.h., dass beim Befahren des Fahrbahnbelags hauptsächlich das vergleichsweise weiche erste mineralische Material abgenutzt wird, aus dem die Matrix gebildet ist, welche nach Art eines Mörtels die aus dem härteren zweiten mineralischen Material gebildeten Körner umschliesst. Im Unterschied zum Matrixmaterial wird das härtere Körnermaterial beim Befahren des Fahrbahnbelags vergleichsweise wenig oder kaum abgenutzt. Die Matrix wird soweit abgenutzt, bis sie die Körner nicht mehr zu halten vermag und diese aus der Matrix herausfallen, worauf sie durch den Verkehr, Wischvorgänge und/oder Witterungseinflüsse vom Fahrbahnbelag weg gefördert werden. An der Stelle, wo vorher die Körner in der Matrix festgehalten waren, bleibt dann ein Loch übrig. Durch diese Art von differentieller Abnutzung ist gewährleistet, dass der Splitt selbst während seiner Abnutzung eine schmirgelpapierartige, rauhe Oberfläche beibehält.

Insgesamt behält damit die Oberfläche eines aus dem erfindungsgemässen Baustoff hergestellten Fahrbahnbelags auch bei einer starken Verkehrsbelastung während Jahren eine rauhe Mikrotextur bzw. eine rauhe Oberfläche bei. Aufgrund der rauhen Belagsoberfläche ergibt sich eine diffuse Reflexion des Lärms, der beim Befahren des Fahrbahnbelags erzeugt wird. Dies wiederum hat eine deutlich wahrnehmbare Lärmminderung in der Umgebung des Fahrbahnbelags zur Folge.

Gemäss einer bevorzugten Ausführungsart der Erfindung kann der auf den Baustoff insgesamt bezogene Anteil an Belagsbindemittel 3 Gew.% oder mehr, vorzugsweise mehr als 4 Gew.%, insbesondere sogar mehr als 5 Gew.% betragen. Dabei hat sich jedoch als vorteilhaft erwiesen, wenn der auf den Baustoff insgesamt bezogene Belagsbindemittelanteil 15 Gew.% oder weniger, vorzugsweise weniger als 10 Gew.%, insbesondere sogar weniger als 8 Gew.% beträgt.

Gemäss einer weiteren bevorzugten Ausführungsart der Erfindung kann der auf den Baustoff insgesamt bezogene Anteil an Splitt 20 Gew.% oder mehr, vorzugsweise mehr als 30 Gew.%, insbesondere sogar mehr als 40Gew.% betragen. Als vorteilhaft hat sich jedoch erwiesen, wenn der auf den Baustoff insgesamt bezogene Splittanteil 80 Gew.% oder weniger, vorzugsweise weniger als 70 Gew.%, insbesondere sogar weniger als 60 Gew.% beträgt.

Eine weitere bevorzugte Ausführungsart der Erfindung zeichnet sich dadurch aus, dass der auf den Baustoff insgesamt bezogene Anteil an Leichtzuschlag 5 Gew.% oder mehr, vorzugsweise mehr als 10 Gew.%, insbesondere sogar mehr als 15 Gew.% beträgt. Als vorteilhaft hat sich dabei herausgestellt, wenn der auf den Baustoff insgesamt bezogene Leichtzuschlagsanteil 50 Gew.% oder weniger, vorzugsweise weniger als 40 Gew.%, insbesondere sogar weniger als 30 Gew.% beträgt.

Das zur Herstellung eines Baustoffs gemäss einer bevorzugten Erfindungsvariante verwendete Belagsbindemittel kann ein Bitumen oder ein bitumenhaltiges Bindemittel sein. In diesem Fall ist der Baustoff als Asphalt zu bezeichnen.

Als Alternative zu einem Bitumen oder einem bitumenhaltigen Bindemittel kann jedoch auch ein anderes zur Herstellung von Fahrbahnbelägen geeignetes Belagsbindemittel verwendet werden, so z.B. ein vollsynthetisches Bindemittel.

Ein Baustoff gemäss einer weiteren bevorzugten Erfindungsvariante zeichnet sich dadurch aus, dass der im Baustoff enthaltene Splitt gebrochener Quarzsandstein ist. Quarzsandstein ist ein zweiphasiges Gestein. Eine Gesteinsphase von Quarzsandstein besteht aus Quarzkörnern, die andere Gesteinsphase aus einer Matrix, welche die Quarzkörner umschliesst, so dass die Quarzkörner in der Matrix eingebettet sind. Als gut geeignet zur Herstellung für einen erfindungsgemässen Baustoff haben sich harte Quarzsandsteine mit einer Kalkmatrix erwiesen. Solche Quarzsandsteine werden mitunter auch als alpine Sandsteine bezeichnet.

Grundsätzlich ist jedoch zur Herstellung eines Baustoffs gemäss der Erfindung auch Splitt geeignet, der aus anderen zweiphasigen Gesteinen als Quarzsandstein gebildet ist. Als Alternative oder in Ergänzung zu Splitt aus Quarzsandstein kann z.B. der Baustoff auch Splitt aus Rauhwacke (auch als Rauwacke, Grauwacke, Zellendolomit oder Zellenkalk bezeichnet) enthalten.

Gemäss einer bevorzugten Ausführungsart der Erfindung ist der im Baustoff enthaltene Leichtzuschlag Blähton. Blähton ist vergleichsweise günstig und hat sich als Leichtzuschlag für verschiedenste Anwendungen im Hoch- und Tiefbau bewährt.

Anstelle von Blähton oder in Kombination mit Blähton sind jedoch auch andere als Leichtzuschläge im Sinne der Norm DIN 4226, Teil 2, geltende Stoffe zur Herstellung eines Baustoffs gemäss der Erfindung geeignet, so z.B. Naturbims, Lavaschlacke, Tuff, Blähschiefer, Ziegelsplitt, Hüttenbims und/oder gesinterte Steinkohlenflugasche.

Zusätzlich zu den Komponenten Belagsbindemittel, Splitt und Leichtzuschlag kann die Mischung, aus welcher der erfindungsgemässe Baustoff hergestellt ist, noch weitere Komponenten enthalten, insbesondere Sand und/oder Steinmehl. Im Falle von Sand und/oder Steinmehl sind diese vorzugsweise aus dem gleichen Steinmaterial zusammengesetzt wie der Splitt. Dadurch wird die Möglichkeit geschaffen, sämtliche für den Baustoff verwendeten mineralischen Stoffe (d.h. Splitt, Sand und Steinmehl) aus dem gleichen Steinmaterial herzustellen, das z.B. aus einem einzigen Steinbruch gewonnen werden kann. Dadurch wird die Logistik zur Herstellung des Baustoffs vereinfacht.

Grundsätzlich können jedoch auch Splitt, Sand und/oder Steinmehl aus verschiedenen Gesteinen zur Herstellung eines erfindungsgemässen Baustoffs verwendet werden. Weiter ist es auch möglich, Splittmischungen aus verschiedenen Gesteinen und/oder Sandmischungen aus verschiedenen Gesteinen und/oder Steinmehlmischungen aus verschiedenen Gesteinen zur Herstellung eines Baustoffs gemäss der Erfindung zu verwenden.

Vorzugsweise hat der im erfindungsgemässen Baustoff enthaltene Splitt eine sehr hohe Polierresistenz (auch als Polierwiderstand bezeichnet). Eine hohe Polierresistenz des Splitts gewährleistet, dass dieser auch bei einer starken Abnutzung durch den über den Splitt fahrenden motorisierten Strassenverkehr nicht glatt poliert wird, sondern eine rauhe Oberfläche behält. Als vorteilhaft hat sich Splitt erwiesen, dessen Polierresistenz, quantifiziert durch den Polierwert PSV (Polished Stone Value) höher ist als 58, vorzugsweise höher als 60, insbesondere sogar höher als 62.

Gemäss einer weiteren bevorzugten Ausführungsart der Erfindung enthält die Mischung, aus welcher der erfindungsgemässe Baustoff hergestellt ist, zusätzlich kautschukhaltiges Schrot oder kautschukhaltiges Mehl (mitunter auch als Kautschukmehl oder Gummimehl bezeichnet). Der zusätzlich Anteil an Kautschuk kann zu einer weiteren Lärmminderung bei einem aus diesem Baustoff hergestellten Fahrbahnbelag führen.

Das kautschukhaltige Mehl oder Schrot kann insbesondere aus alten Fahrzeugreifen hergestellt sein, welche auf diese Art für eine nützliche Anwendung wiederverwendet werden können.

Das kautschukhaltige Mehl oder Schrot kann als separate Mischungskomponente zusätzlich zu den Komponenten Belagsbindemittel, Splitt und Leichtzuschlag der Mischung beigemicht sein, aus welcher der erfindungsgemässe Baustoff hergestellt ist. Im Falle von kautschukhaltigem Mehl kann dieses aber auch in Ergänzung und/oder als Alternative zu einer separaten kautschukhaltigen Mischungskomponente dem Belagsbindemittel beigemischt sein, so dass das für den Baustoff verwendete Belagsbindemittel ein kautschukhaltiges Belagsbindemittel ist.

Der für den Baustoff verwendete Kautschuk kann ein Naturkautschuk (insbesondere Gummi) oder ein Synthese-Kautschuk (auch als synthetischer Kautschuk bezeichnet) sein.

Die Erfindung betrifft weiterhin auch die Verwendung eines oben genannten Baustoffs zur Herstellung eines Fahrbahnbelags für Verkehrsflächen, insbesondere eines Strassenbelags oder eines Belags für eine Zufahrtsrampe oder einen Parkplatz.

Gemäss einem weiteren Aspekt der Erfindung wird aus einem erfindungsgemässen Baustoff ein Fahrbahnbelag für eine Verkehrsfläche hergestellt, indem der Baustoff zunächst in einem erwärmten Zustand auf einen vorbereiteten Fahrbahnuntergrund eingebaut, anschliessend verdichtet und danach durch Abkühlen lassen verfestigt wird.

Schliesslich ist die Erfindung auch auf einen durch das oben erwähnte Verfahren hergestellten Fahrbahnbelag gerichtet.

Aus der nachfolgenden Detailbeschreibung und der Gesamtheit der Patentansprüche ergeben sich weitere vorteilhafte Ausführungsformen und Merkmalskombinationen der Erfindung.

### Wege zur Ausführung der Erfindung

### Beispiel 1

Als Beispiel für einen erfindungsgemässen Baustoff zur Herstellung eines Fahrbahnbelags wird nachfolgend ein Baustoff in Form eines Walzasphalts angegeben, der aus der folgenden Mischung hergestellt worden ist:

| | |
|---|---|
| Steinmaterial, enthaltend Splitt, Sand und Steinmehl | 71 Gew.% |
| Belagsbindemittel, Sorte PmB-C | 6.7 Gew.% |
| Blähton | 22.3 Gew.% |

Die oben angegebenen Prozentsätze sind auf das Gewicht des Asphalts insgesamt bezogen.

Das gesamte Steinmaterial, d.h. sowohl der Splitt als auch der Sand als auch das Steinmehl, bestehen aus alpinem Sandstein, der von der Firma FAMSA (Fabrique d'Agglomérés Monthey SA) in einem Steinbruch in Choëx, Schweiz, abgebaut worden ist. Die Korngrössenverteilung des verwendeten Steinmaterials kann der nachfolgenden tabellarischen Zusammenstellung einer Siebanalyse dieses Steinmaterials entnommen werden:

| Sieböffnung [mm] | Durchgang [Gew.%] |
|---|---|
| 0.09 | 8.3 |
| 0.13 | 9.0 |
| 0.25 | 11 |
| 0.5 | 14 |
| 1.0 | 18 |
| 2.0 | 28 |
| 2.8 | 33 |
| 4.0 | 34 |
| 5.6 | 41 |
| 8.0 | 97 |
| 11.2 | 100 |

Für den Splitt aus diesem Steinmaterial wurde eine Polierresistenz mit einem Polierwert PSV zwischen 62 und 64 gemessen.

Als Belagsbindemittel wurde ein polymermodifiziertes Bitumen der Sorte PmB-C gemäss der Schweizerischen Norm SN 670 210 für polymermodifizierte Bitumen verwendet. Es handelt sich dabei um ein SBS-haltiges Bitumen, d.h. ein Bitumen, das SBS (Styrol/Butadien/Styrol-Triblockcopolymere) enthält.

Zur Herstellung des Asphalts wurden die Komponenten der oben erwähnten Mischung bei einer Aufbereitungstemperatur zwischen 150° C und 160° C möglichst homogen gemischt. Der aufbereitete Asphalt wies die folgenden Marshallwerte auf:

| | |
|---|---|
| Rohdichte | 2.02 g/cm³ |
| Dichte (Mischgut) | 2.13 g/cm³ |
| Hohlraumgehalt | 5.0 Vol.% |
| Hohlraumfüllgrad | 72 % |

Danach wurde der Asphalt bei einer Einbautemperatur zwischen 130° C und 150° C auf den vorbereiteten Fahrbahnuntergrund eingebaut und mittels einer Walze verdichtet. Anschliessend wurde der Asphalt durch Abkühlen lassen verfestigt, um den Fahrbahnbelag herzustellen.

Für den so hergestellten Fahrbahnbelag wurde beim Befahren durch alltäglichen Strassenverkehr eine Lärmreduktion von ungefähr 3 dBA gemessen im Vergleich zu einem Strassenbelag, der aus einem gebräuchlichen Asphalt hergestellt ist.

Zusammenfassend ist festzustellen, dass durch die Erfindung ein Baustoff und ein Verfahren zur Herstellung eines Fahrbahnbelags angegeben werden, der langfristig lärmmindernd und rutschsicher ist.

## Patentansprüche

1. Baustoff zur Herstellung eines Fahrbahnbelags, **dadurch gekennzeichnet, dass** der Baustoff aus einer Mischung hergestellt ist, die wenigstens die folgenden Komponenten aufweist:
a) Belagsbindemittel;
b) Splitt aus einem Steinmaterial, das eine aus einem ersten mineralischen Material gebildete Matrix aufweist, in welche Körner eingebettet sind, die aus einem zweiten mineralischen Material gebildet sind, wobei das zweite mineralische Material härter ist als das erste mineralische Material;
c) Leichtzuschlag.

2. Baustoff nach Anspruch 1, **dadurch gekennzeichnet, dass** der Belagsbindemittelanteil 3 - 15 Gew.%, vorzugsweise 4 - 10 Gew.%, insbesondere 5 - 8 Gew.% bezogen auf den Baustoff insgesamt beträgt.

3. Baustoff nach Anspruch 1 oder 2, **dadurch gekennzeichnet, dass** der Splittanteil 20 - 80 Gew.%, vorzugsweise 30 - 70 Gew.%, insbesondere 40 - 60 Gew.% bezogen auf den Baustoff insgesamt beträgt.

4. Baustoff nach einem der Ansprüche 1 bis 3, **dadurch gekennzeichnet, dass** der Leichtzuschlagsanteil 5 - 50 Gew.%, vorzugsweise 10 - 40Gew.%, insbesondere 15 - 30 Gew.% bezogen auf den Baustoff insgesamt beträgt.

5. Baustoff nach einem der Ansprüche 1 bis 4, **dadurch gekennzeichnet, dass** das Belagsbindemittel ein Bitumen oder ein bitumenhaltiges Bindemittel ist.

6. Baustoff nach einem der Ansprüche 1 bis 5, **dadurch gekennzeichnet, dass** der Splitt gebrochener Quarzsandstein ist.

7. Baustoff nach einem der Ansprüche 1 bis 6, **dadurch gekennzeichnet, dass** der Leichtzuschlag Blähton ist.

8. Baustoff nach einem der Ansprüche 1 bis 7, **dadurch gekennzeichnet, dass** die Mischung weiter Sand und Steinmehl aufweist, wobei der Sand und das Steinmehl aus dem gleichen Steinmaterial zusammengesetzt sind wie der Splitt.

9. Baustoff nach einem der Ansprüche 1 bis 8, **dadurch gekennzeichnet, dass** der Splitt eine hohe Polierresistenz hat mit einem Polierwert PSV ≥ 58, vorzugsweise einem Polierwert PSV ≥ 60, insbesondere sogar einem Polierwert PSV ≥ 62.

10. Baustoff nach einem der Ansprüche 1 bis 9, **dadurch gekennzeichnet, dass** die Mischung weiter kautschukhaltes Mehl und/oder kautschukhaltiges Schrot aufweist.

11. Verwendung eines Baustoffs nach einem der vorangehenden Ansprüche zur Herstellung eines Fahrbahnbelags für Verkehrsflächen, insbesondere eines Strassenbelags oder eines Belags für eine Zufahrtsrampe oder einen Parkplatz.

12. Verfahren zur Herstellung eines Fahrbahnbelags für eine Verkehrsfläche, **dadurch gekennzeichnet, dass** ein Baustoff nach einem der Ansprüche 1 bis 10 zunächst in einem erwärmten Zustand auf einen vorbereiteten Fahrbahnuntergrund eingebaut, anschliessend verdichtet und danach durch Abkühlen lassen verfestigt wird.

13. Fahrbahnbelag, hergestellt durch ein Verfahren nach Anspruch 12.
